Europäisches Patentamt

(19) European Patent Office

Office européen des brevets

(11) **EP 0 775 515 A1**

(12) **EUROPEAN PATENT APPLICATION**

(43) Date of publication:
28.05.1997 Bulletin 1997/22

(51) Int. Cl.$^6$: **B01D 53/50**, C01F 5/42

(21) Application number: 96111397.4

(22) Date of filing: 15.07.1996

(84) Designated Contracting States:
AT BE CH DE DK ES FI FR GB GR IE LI NL SE

(30) Priority: 20.10.1995 US 545989

(71) Applicant: DRAVO LIME COMPANY
Pittsburgh Pennsylvania 15222 (US)

(72) Inventor: College, John W.
Pittsburgh, PA 15234 (US)

(74) Representative: Frankland, Nigel Howard
FORRESTER & BOEHMERT
Franz-Joseph-Strasse 38
80801 München (DE)

Remarks:
The references to the drawing are deemed to be
deleted (Rule 43 EPC).

(54) **Sulphur dioxide scrubbing**

(57) A process for removing sulphur dioxide from a gaseous stream using magnesium scrubbing components discharges a second portion of aqueous solution from a wet scrubbing unit in addition to a conventional first portion discharge. The first portion discharge is adjusted so as to increase the magnesium sulphite content thereof to substantial saturation A second portion is discharged, to which magnesium hydroxide is added so as to provide a supersaturated solution of magnesium sulphite, by pH elevation and/or cooling, so as to precipitate magnesium sulphite hexahydrate therefrom. The magnesium sulphite hexahydrate is separated from the aqueous solution and can be used to form a high purity magnesium hydroxide or magnesium oxide.

## Description

THIS INVENTION relates to the removal of sulphur dioxide from hot gaseous streams, such as hot combustion gases resulting from the burning of coal, has been effected by various wet scrubbing processes using as a scrubbing medium of lime, magnesium-enhanced lime, or magnesium oxide or hydroxide. Wet scrubbing processes using magnesium-enhanced lime as a scrubbing medium are described, for example, in US-A-3,919,393, US-A-3,919,394, US-A-3,914,378, and US-A-4,976,937.

One type of wet scrubbing system for removing sulphur dioxide from hot gaseous stream uses a clear solution of magnesium scrubbing components without the presence of lime in the wet scrubbing unit. Such a system is described, for example, in US-A-4,996,032, US-A-5,084,255 and US-A-5,270,026, the contents of all of which are incorporated by reference herein. In US-A-5,039,499, a process is described wherein magnesium hydroxide is added to an aqueous scrubbing liquor to remove sulphur dioxide, with the scrubber effluent oxidized and then treated with a magnesium-containing lime slurry so as to regenerate magnesium hydroxide which is recycled to the wet scrubbing unit. US-A-4,996,032, US-A-5,084,255 and US-A-5,270,026 teach additional treatment and recovery of components of the effluent from such a magnesium scrubbing system, so as to provide by-products in a more purified form. The provision of pure by-products from such a magnesium scrubbing system difficulties in that hydrocycloning of by-product gypsum and magnesium hydroxide, resulting from the regeneration step, achieves a by-product containing about 70 percent magnesium hydroxide and 30 percent gypsum ($CaSO_4 \cdot 2H_2O$). Use of fresh water to dissolve the gypsum with subsequent separation of the magnesium hydroxide therefrom can produce a magnesium hydroxide by-product of a purity of about 91 percent. With such dissolution of gypsum, however, the magnesium hydroxide produced does not have good dewatering properties, with thickening provided a magnesium hydroxide solids content of only about 15 percent and filtering providing a magnesium hydroxide solids content of only about 30 percent. It would be very beneficial if a higher purity and higher solids content of magnesium hydroxide by-product from flue gas desulphurisation systems could be achieved since the higher the purity and the higher the solids content, the more value that is attached to the product.

The present invention seeks to provide an improved process for removing sulphur dioxide from a gaseous stream.

According to this invention there is provided a process for removing sulphur dioxide from a sulphur-dioxide-containing gaseous stream in a wet scrubbing unit comprising contacting an aqueous solution of magnesium scrubbing components for sulphur dioxide with said gaseous stream to remove sulphur dioxide therefrom and produce an aqueous solution of magnesium sulphite and magnesium bisulphite, discharging a first portion of the magnesium sulphite and magnesium bisulphite aqueous solution from the wet scrubbing unit which is regenerated to produce magnesium hydroxide, adjusting the discharge of said first portion of the magnesium sulphite and magnesium bisulphite aqueous solution so as to increase the magnesium sulphite content of the aqueous solution in said wet scrubbing unit to substantial saturation; discharging a second portion of said magnesium sulphite and magnesium bisulphite aqueous solution from said wet scrubbing unit; adding magnesium hydroxide to said discharged second portion of magnesium sulphite and bisulphite aqueous solution so as to provide a supersaturated solution of magnesium sulphite and precipitate magnesium sulphite solids from said solution; and separating precipitated magnesium sulphite solids from said aqueous solution.

Preferably said second portion of magnesium sulphite and magnesium bisulphite the aqueous solution discharged from said wet scrubbing unit is at a pH of between 5.0 to 6.5, and said step of adding magnesium hydroxide to said discharged second portion of magnesium sulphite and bisulphite aqueous solution increases the pH thereof to at least 7.0.

Advantageously said magnesium hydroxide added to said discharged second portion of magnesium sulphite and bisulphite aqueous solution is produced by said regeneration of said discharged first portion of magnesium sulphite and magnesium bisulphite aqueous solution.

Conveniently after separation of said precipitated magnesium sulphite solids from said aqueous solution, said aqueous solution is returned to said wet scrubbing unit.

Preferably said magnesium hydroxide added to said discharged second portion of magnesium sulphite and magnesium bisulphite solution is magnesium hydroxide resulting from the regeneration of said first portion discharged from the wet scrubbing unit.

Advantageously said discharged second portion of magnesium sulphite and magnesium bisulphite is at a temperature of about 50°C or above and said temperature is lowered to about 30°C or lower.

Conveniently said precipitated magnesium sulphite solids comprise primarily magnesium sulphite hexahydrate having a particle size at least as large as 44 micrometres.

Preferably said precipitated magnesium sulphite comprises at least 90% magnesium sulphite hexahydrate and less than 10% magnesium sulphite trihydrate.

As will be described more fully below, in a process for removing sulphur dioxide from a sulphur dioxide-containing gaseous stream where magnesium scrubbing components are used, the discharge of a second portion of aqueous solution from a wet scrubbing unit is desirable in addition to the discharge of a first portion thereof used for regeneration purposes.

Magnesium sulphite and magnesium bisulphite are formed in an aqueous solution by reaction of the magnesium scrubbing compound with sulphur dioxide. A first portio of the magnesium sulphite portion of the magnesium sulphite and magnesium bisulphite aqueous solution is discharged from the wet scrubbing unit. The discharge of the first portion of the magnesium sulphite and magnesium bisulphite aqueous solution is adjusted so as to increase the magnesium sulphite content of the aqueous solution in the wet scrubbing unit to substantial saturation. A second portion of the magnesium sulphite and magnesium bisulphite aqueous solution is then taken from the wet scrubbing unit and magnesium hydroxide added thereto to provide a supersaturated solution of magnesium sulphite and precipitate magnesium sulphite hexahydrate from the aqueous solution, which precipitated magnesium sulphite hexahydrate is separated from the aqueous solution. The magnesium hydroxide added to the discharged second portion may be that which is produced in the regeneration of the first portion that was discharged from the wet scrubbing unit.

The supersaturation of the discharged second portion is effected by an increase in the Ph of the aqueous solution, generally discharged at a pH of between 5.0 to 6.5, to pH of at least about 7.0 by the addition of the magnesium hydroxide. The supersaturation of the discharged second portion is also aided by cooling the portion from a general temperature of about 50°C (122°F) or above to a temperature of about 30°C (86°F) or below.

After separation of the precipitated magnesium hexahydrate solids from the aqueous solution, the aqueous solution may be returned to the wet scrubbing unit.

In order that the invention may be more readily understood and so that further features thereof may be appreciated, the invention will now be described by way of example, with reference to the accompanying drawing which is a flow diagram illustrating an embodiment of the process of the present invention.

US-A-5,039,499 uses magnesium hydroxide addition to a wet scrubbing unit for contact with a hot sulphur dioxide-containing gas stream, such as a hot gas stream (150-175°C) from coal combustion, to remove the sulphur dioxide therefrom. In the wet scrubbing unit, the hot gas stream is quenched to a temperature of about 49-55°C (120-130°F) and the magnesium hydroxide is converted to magnesium bisulphite and magnesium sulphite, primarily magnesium sulphite trihydrate, by the following reactions:

$$Mg(OH)_2 + SO_2 \rightarrow MgSO_3 + H_2O, \tag{1}$$

$$MgSO_3 + SO_2 + H_2O \rightarrow Mg(HSO_3)_2, \tag{2}$$

and

$$Mg(OH)_2 + Mg(HSO_3)_2 \rightarrow 2MgSO_3 + 2H_2O, \tag{3}$$

with the scrubbing liquor comprising a clear solution with very low solids content. The magnesium ion content of the aqueous solution in the wet scrubbing unit is generally between about 2000 to 15,000 parts per million and fresh or recycled magnesium hydroxide solution or suspended is added to the wet scrubbing unit to replenish that which is removed. The pH of the aqueous medium collected, in a hold or recycle tank, is generally at a pH of between 6.0 and 7.0 and most preferably in the range of about 6.0 - 6.5. The scrubbing solution, after passage through the wet scrubbing unit is collected in the hold or recycle tank, with a major portion of the solution then recycled to the wet scrubbing unit while a portion thereof is discharged therefrom so as to remove the sulphur reactants which are primarily magnesium sulphite and some magnesium bisulphite dissolved in the aqueous medium.

The portion of aqueous solution discharged from the system is then oxidized so as to convert the magnesium sulphite and magnesium bisulphite to magnesium sulphite. The resultant magnesium sulphite solution is subjected to a regeneration step where lime is added with the production of calcium sulphite (gypsum) and magnesium hydroxide. The calcium sulphite forms a precipitate which is removed from the aqueous magnesium hydroxide suspension. The aqueous magnesium hydroxide suspension may be recycled to the wet scrubbing unit or used elsewhere or as an intermediate for production of magnesium oxide as a saleable by-product.

In the process of the present invention the above-described steps are preferred and the portion of aqueous solution discharged from the system is a first portion which is adjusted to provide certain features. Additionally, in the process of the present invention a second portion is also discharged and the second portion treated to provide a high purity magnesium sulfite product that can be used to produce high purity magnesium hydroxide or magnesium oxide.

Referring now to the drawing, a wet scrubbing unit 1 is illustrated having a scrubbing section 3 and a hold or recycle tank 5. An aqueous solution of magnesium scrubbing components for removal of sulfur dioxide, such as magnesium oxide, magnesium hydroxide or magnesium bisulfite or sulfite is charged to the system such as adding it through line 7 to the recycle tank 5. The aqueous solution of magnesium scrubbing components leaving the scrubbing section 3 is recycled from the recycle tank 5, through line 9, pump 11, line 13 and sprayers 15 back to the scrubbing section 3 of the wet scrubbing unit 1. A gaseous stream containing sulfur dioxide is charged to the wet scrubbing unit through line 17, passes countercurrent to the flow of aqueous solution with sulfur dioxide removed by contact with the magnesium scrubbing components, and clean gas is discharged from the wet scrubbing unit 1 through outlet 19.

A first portion of the produced aqueous solution of magnesium sulfite and magnesium bisulfite is discharged from the wet scrubbing unit 1, such as through valve 21 in recycle line 13 and passed through line 23 to an oxidizing vessel 25. In the oxidizing vessel 25, the magnesium sulfite and magnesium bisulfite are oxidized , preferably in the presence of an oxidation catalyst such as an iron or manganese oxidizing catalyst, by air or oxygen introduced into the oxidizing vessel through line 27, and gases discharged therefrom through line 29. The oxidation produces magnesium sulphite in aqueous solution which is discharged from the oxidation vessel through line 31 and fed to a regeneration tank 33. In the regeneration tank, the aqueous solution of magnesium sulphite is contacted with lime slurry, such as a magnesium-containing lime slurry containing up to 6.5 percent magnesium hydroxide, charged through line 35 and the lime reacts with the magnesium sulphite to produce magnesium hydroxide and calcium sulphite, (gypsum) according to the reaction.

$$MgSO_4 + Ca(OH)_2 \rightarrow Mg(OH)_2 \cdot 5H_2O + CaSO_4 \cdot 2H_2O). \qquad (4)$$

The gypsum precipitates from the solution which is passed through line 37 to a solids separation unit 39. From the solids separation unit 39, the gypsum is discharged through line 41 while the magnesium hydroxide solution or suspension is passed as return liquor through line 43 for return to the wet scrubbing unit, such as by feeding the same to the recycle tank 5.

In the regeneration tank 33, the amount of lime slurry added is that sufficient to increase the pH of the aqueous medium to a pH of between about 10.5 - 11.0, at which pH any iron or manganese ions would be removed as hydroxides from the system with the gypsum produced. These iron or manganese ions would not be removed by dissolution at the pH found in other regions of the system. Also, with the regeneration and gypsum removed, the system is constantly purged of sulphates. The return liquor in line 43 to the wet scrubbing unit 1 generally contains less than about 1200 mg/1 of sulphates, since these are not readily soluble and are removed through line 41 from the solids separator 39. This purging of sulphates is also a result of the elevated pH int he regeneration tank 33 and the production of gypsum at that step.

The reduction of oxidation in the wet scrubbing unit by removal of catalysts and removal of sulphates aids in the near saturation of sulphite ions in the wet scrubbing unit 1.

In the present process, the discharge of the first portion of magnesium sulphite and magnesium bisulphite from the wet scrubbing unit 1, through line 23 is adjusted so as to increase the magnesium sulphite content of the aqueous scrubbing liquor in the wet scrubbing unit 1 to substantial saturation. A second portion of the magnesium sulphite and magnesium bisulphite aqueous solution is then discharged by means of valve 45 through line 47 to a crystallizing unit 49. In the crystallizing unit 49, magnesium hydroxide is added tot he discharged second portion of magnesium sulphite and magnesium bisulphite aqueous solution, such as through line 51 with an increase in the pH of the aqueous solution effected to a pH of about 7.0 which results in a supersaturated solution of magnesium sulphite and precipitates magnesium sulphite solids from the solution, primarily as magnesium sulphite hexahydrate. The aqueous solution containing precipitated magnesium hydroxide hexahydrate crystals, which may have a large particle size, such as a particle size of 44 micrometres in diameter or more, is discharged from the crystallizing unit 49 through line 52 and the precipitated magnesium sulphite hexahydrate crystals separated, such as by filtration in a filter 55 and removed through line 57 for use. A principal use of such magnesium sulphite hexahydrate would be in the production of high purity magnesium oxide and hydroxide. The aqueous filtrate from filter 55 is removed through line 59 and may be returned to the wet scrubbing unit, such as by addition to the magnesium hydroxide suspension being returned through line 43 to the recycle tank 5.

The magnesium hydroxide added to the crystallizing unit 49 may be provided from any suitable source, with one such source being an slipstream from line 43 taken through valve 61 and passed by means of line 63 to line 51 charging magnesium hydroxide to the crystallising unit 49.

The effect of either a decrease in temperature (49°C to 30°C) or of an increase in pH without temperature change (49°C) on the relative saturation (RS) of an aqueous solution of magnesium sulfite hexahydrate is illustrated in the following TABLE I:

TABLE I

| pH | Starting Conditions (Temp: 49°C) | | RS when Temp Adjusted to 30°C No pH change | RS when pH Adjusted to 7.0 No Temp Change |
|---|---|---|---|---|
| | Sulfite mg/l | Mg mg/l | | |
| 6.06 | 12,216 | 6154 | 1.34 | 1.35 |
| 5.87 | 20,232 | 7261 | 1.77 | 2.12 |
| 5.73 | 14,464 | 6179 | 1.68 | 1.57 |
| 6.14 | 13,256 | 6216 | 1.57 | 1.46 |
| 5.83 | 15,176 | 6523 | 1.28 | 1.65 |
| 5.73 | 15,336 | 6427 | 1.12 | 1.65 |
| 5.74 | 14,264 | 6088 | 1.03 | 1.53 |
| 6.20 | 15,160 | 7047 | 1.96 | 1.70 |
| 6.22 | 15,472 | 7287 | 2.06 | 1.75 |

As illustrated by Table I, the decrease in temperature or increase in pH increases the relative saturation of a magnesium sulfite hexahydrate aqueous solution.

The effect of both an increase in pH and a lowering of temperature on the relative saturation of an aqueous solution of magnesium sulfite hexahydrate is shown in the following TABLE II where RS is Relative Saturation:

TABLE II

| Scrubber Operating Conditions | | | | Crystallizer Operating Conditions |
|---|---|---|---|---|
| pH | Sulfite | Mg | R.S. for $MgSO_3 \cdot 6H_2O$ @ given pH and 49°C | R.S. for $MgSO_3 \cdot 6H_2O$ @ pH 7.0 and 20°C |
| 6.06 | 12,216 | 6154 | 0.78 | 3.14 |
| 5.87 | 20,232 | 7261 | 1.08 | 5.17 |
| 5.73 | 14,464 | 6179 | 0.92 | 3.40 |
| 6.14 | 13,256 | 6216 | 0.61 | 3.68 |
| 5.83 | 15,176 | 6523 | 0.75 | 3.89 |
| 5.73 | 15,336 | 6427 | 0.66 | 3.91 |
| 5.74 | 14,264 | 6088 | 0.61 | 3.61 |
| 6.20 | 15,160 | 7047 | 1.14 | 3.94 |
| 6.22 | 15,472 | 7287 | 1.19 | 4.04 |

As shown in Table II, both increasing the pH and lowering the temperature effects a great change in the relative saturation of a magnesium sulfite hexahydrate aqueous solution.

As described hereinbefore, the use of a second discharged portion of the magnesium sulphite and magnesium bisulphite aqueous solution from the wet scrubbing unit will result in a very pure magnesium sulphite hexahydrate crystalline product since sulphites are built up in the wet scrubbing unit while sulphites and any oxidation catalysts are purged from the scrubbing system in the regeneration and gypsum separation step used on the first discharged portion.

Magnesium sulphite hexahydrate produced in the process would preferably be converted to magnesium oxide and would produce a very pure magnesium oxide product due to the purity of the starting magnesium sulphite hexahydrate. The purity of such calcined magnesium oxide produced from the magnesium sulphite hexahydrate (from line 57 of the drawing), as compared with magnesium oxide formed by calcination of the magnesium hydroxide from the oxidation, regeneration and separation of the first portion (from line 43 of the drawing) is compared in TABLE III as follows, where all figures represent percentages by weight.

TABLE III

| | Line 43 | Calcined Line 43 Product | Line 57 | Calcined Line 57 Product |
|---|---|---|---|---|
| % Moisture | 80-85 | ---- | 0-2 | ---- |
| $Mg(OH)_2$ | 75.0 | ---- | ---- | ---- |
| $CaSO_42H_2O$ | 22.0 | ---- | ---- | ---- |
| $CaCO_3$ | 2.0 | ---- | ---- | ---- |
| Inerts | 1.0 | ---- | ---- | ---- |
| $MgSO_3 \cdot 6H_2O$ | ---- | ---- | 98.89 | ---- |
| $MgSO_4 \cdot 6H_2O$ | ---- | ---- | 0.70 | ---- |
| $MgSO_3 \cdot \frac{1}{2}H_2O$ | ---- | ---- | 0.41 | ---- |
| MgO | ---- | 73.1 | ---- | 97.94 |
| $CaSO_4$ | ---- | 24.1 | ---- | 2.06 |
| Inerts | ---- | 1.3 | ---- | 0.0 |
| CaO | ---- | 1.5 | ---- | 0.0 |

The improvement in purity of the calcined product is obvious. The cost of calcining has changed considerably as much less water is evaporated in calcining the $MgSO_3 \cdot 6H_2O$. This is true even when the thickened $Mg(OH)_2$ (line 43) is run through a pressure filter to get to 40% solids. At 40% solids the $Mg(OH)_2$ would contain about 68 lbs of free water and chemical water, the $MgSO_3 \cdot 6H_2O$ (line 57) at 2% $H_2O$ will contain about 50 lbs of free and chemical water. The 97.9 purity MgO can now be used for higher valued uses such as refractory brick (95% purity required) and Mg metal production 97% purity required.

The bleed stream flow, or portion removed, of the aqueous solution of magnesium sulphite and magnesium bisulphite from the wet scrubbing unit has a decided affect on the recycle liquor chemistry. For example, in a process such as described in U.S. 5,039,499 where a recycle flow rate of about 11.35 cubic metres/minute (3000 gallons/minute (GPM)) is used, chemistries at different blowdown rates, a removal of a portion of the aqueous solution, will show the effect as shown in Table IV:

TABLE IV

| Blowdown Rate (cubic metres/minute) | | | |
|---|---|---|---|
| | 1.90(500GPM) | 0.95(250GPM) | 0.76(200GPM) |
| pH | 6.0 | 6.0 | 6.0 |
| Ca(Mg/1) | 50 | 50 | 50 |
| Mg(mg/1) | 3,000 | 6,000 | 7,500 |
| $SO_3$(mg/1) | 8,800 | 17,600 | 22,000 |
| $SO_4$(mg/1) | 4,000 | 8,000 | 10,000 |
| RS for $MgSO_36H_2O$ | 0.49 | 0.96 | 1.26 |

Thus illustrated is the ease of altering the chemistry by allowing the magnesium hydroxide to react with the sulphur dioxide and accumulating in the recycle tank to increase sulphite content and the relative saturation for magnesium sulphite hexahydrate in the scrubbing liquor.

The process, as described, removes sulphur dioxide using an aqueous solution of magnesium scrubbing components so as to produce a pure magnesium sulphite product which is more readily dewatered than conventionally produced such magnesium sulphite, and which can be converted to a pure magnesium hydroxide or magnesium oxide product.

From the foregoing description it will be appreciated that a preferred process in accordance with the present invention comprises a process for removing sulphur dioxide from a gaseous stream using an aqueous solution of magnesium scrubbing components so as to produce a pure magnesium sulphite product which can then by converted to a pure magnesium hydroxide or magnesium oxide by-product.

The preferred process for removing sulphur dioxide from a gaseous stream uses an aqueous solution of magnesium scrubbing components so as to produce a magnesium sulphite product which is more readily dewatered than conventionally produced magnesium sulphite.

The features disclosed in the foregoing description in the following claims and/or in the accompanying drawings may, both separately and in any combination thereof, be material for realising the invention in diverse forms thereof.

## Claims

1. A process for removing sulphur dioxide from a sulphur-dioxide-containing gaseous stream in a wet scrubbing unit comprising contacting an aqueous solution of magnesium scrubbing components for sulphur dioxide with said gaseous stream to remove sulphur dioxide therefrom and produce an aqueous solution of magnesium sulphite and magnesium bisulphite, discharging a first portion of the magnesium sulphite and magnesium bisulphite aqueous solution from the wet scrubbing unit which is regenerated to produce magnesium hydroxide, adjusting the discharge of said first portion of the magnesium sulphite and magnesium bisulphite aqueous solution so as to increase the magnesium sulphite content of the aqueous solution in said wet scrubbing unit to substantial saturation; discharging a second portion of said magnesium sulphite and magnesium bisulphite aqueous solution from said wet scrubbing unit; adding magnesium hydroxide to said discharged second portion of magnesium sulphite and bisulphite aqueous solution so as to provide a supersaturated solution of magnesium sulphite and precipitate magnesium sulphite solids from said solution; and separating precipitated magnesium sulphite solids from said aqueous solution.

2. A process according to Claim 1, wherein said second portion of magnesium sulphite and magnesium bisulphite aqueous solution discharged from said wet scrubbing unit is at a pH of between 5.0 to 6.5, and said step of adding magnesium hydroxide to said discharged second portion of magnesium sulphite and bisulphite aqueous solution increases the pH thereof to at least 7.0.

3. A process according to Claim 1 or 2, wherein said magnesium hydroxide added to said discharged second portion of magnesium sulphite and bisulphite aqueous solution is produced by said regeneration of said discharged first portion of magnesium sulphite and magnesium bisulphite aqueous solution.

4. A process according to any one of the preceding claims wherein, after separation of said precipitated magnesium sulphite solids from said aqueous solution, said aqueous solution is returned to said wet scrubbing unit.

5. A process according to any one of the preceding claims, wherein said magnesium hydroxide added to said discharged second portion of magnesium sulphite and magnesium bisulphite solution is magnesium hydroxide resulting from the regeneration of said first portion discharged from the wet scrubbing unit.

6. A process according to any one of the preceding claims, wherein said discharged second portion of magnesium sulphite and magnesium bisulphite is at a temperature of about 50°C or above and said temperature is lowered to about 30°C or lower.

7. A process according to any one of the preceding claims, wherein said precipitated magnesium sulphite solids comprise primarily magnesium sulphite hexahydrate having a particle size at least as large as 44 micrometres.

8. A process according to any one of the preceding claims, wherein said precipitated magnesium sulphite comprises at least 90 percent magnesium sulphite hexahydrate and less than 10 percent magnesium sulphite trihydrate.

**European Patent Office**    **EUROPEAN SEARCH REPORT**    Application Number

EP 96 11 1397

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | CA 2 133 694 A (DRAVO LIME CO) 26 April 1995<br>* page 6, paragraph 3 - page 13, paragraph 2; claims 1-16 * | 1-8 | B01D53/50<br>C01F5/42 |
| Y,D | US 5 039 499 A (STOWE JR DONALD H) 13 August 1991<br>* column 5, line 26 - column 6, line 47; figure 2; table II * | 1-8 | |
| A | US 3 622 270 A (SHAH INDRAVADAN S) 23 November 1971<br>* column 3, line 56 - line 75; figure 1 * | 1,4,6 | |
| A | US 4 255 402 A (LOWELL PHILIP S) 10 March 1981<br>* column 7, line 28 - column 9, line 19; figure 1 * | 1-6 | |
| A | GB 1 328 403 A (BABCOCK & WILCOX CO) 30 August 1973<br>* page 2, line 23 - page 3, line 62; figure 1 * | 1,4,7 | TECHNICAL FIELDS SEARCHED (Int.Cl.6)<br><br>B01D<br>C01F |
| A | PATENT ABSTRACTS OF JAPAN<br>vol. 009, no. 278 (C-312), 6 November 1985<br>& JP 60 125231 A (KIMURA KAKOUKI KK), 4 July 1985,<br>* abstract * | 1,2,4 | |

The present search report has been drawn up for all claims

| Place of search | Date of completion of the search | Examiner |
|---|---|---|
| THE HAGUE | 27 January 1997 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)